# EUROPEAN PATENT APPLICATION

(11) **EP 4 675 766 A1**
(43) Date of publication of application: **07.01.2026**
(21) Application number: 24886225.2
(22) Date of filing: 30.10.2024
(51) Int. Cl.: H01M 10/6551, H01M 10/613, H01M 50/59, H01M 50/289, H01M 50/502, H01M 50/367, H01M 50/317, H01M 50/342, H01M 50/178

(54) **BATTERY PACK**

(30) Priority: 03.11.2023 KR 20230150513
(71) Applicant: LG Energy Solution, Ltd., Seoul 07335 (KR)
(72) Inventor: LEE, Jae Hyun, Daejeon 34122 (KR); LEE, Hyoung Suk, Daejeon 34122 (KR)
(74) Representative: Plasseraud IP
(86) International application number: PCT/KR2024/016729
(87) International publication number: WO 2025/095552

(57) **Abstract**

The present technology provides a battery pack including a pack housing including a bottom plate with a cooling channel, and a battery assembly mounted in the pack housing, in which the battery assembly includes a separation structure with a plurality of cell accommodation spaces separated from each other in a first direction, a plurality of battery cells accommodated in the plurality of cell accommodation spaces of the separation structure and extending in a second direction perpendicular to the first direction, and a heat dissipation fin configured to thermally couple at least one of electrode leads of the plurality of battery cells to the bottom plate.

## Description

### [Technical Field]

The present invention relates to a battery pack.

This application claims the benefit of priority based on Korean Patent Application No. 10-2023-0150513, filed on November 3, 2023, and the entire content of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

As secondary batteries are used for mobility, the demand for the safety of secondary batteries is increasing. A driver's life may be in danger when an accident such as fire occurs in a secondary battery used for mobility and thus research on technology for enhancing the safety of secondary batteries is indispensable.

### [Disclosure]

### [Technical Problem]

The present invention is directed to providing a battery pack.

### [Technical Solution]

An aspect of the present invention provides a battery pack including a pack housing including a bottom plate with a cooling channel, and a battery assembly mounted in the pack housing, in which the battery assembly includes a separation structure with a plurality of cell accommodation spaces separated from each other in a first direction, a plurality of battery cells accommodated in the plurality of cell accommodation spaces of the separation structure and extending in a second direction perpendicular to the first direction, and a heat dissipation fin configured to thermally couple at least one of electrode leads of the plurality of battery cells to the bottom plate.

In example embodiments, the battery pack may further include a thermally conductive adhesive layer between at least one of the electrode leads of the plurality of battery cells and the heat dissipation fin.

In example embodiments, the heat dissipation fin may include a first part connected to at least one of the electrode leads of the plurality of battery cells, and a second part extending along an upper surface of the bottom plate and connected to the bottom plate.

In example embodiments, the battery pack may further include a frame configured to support the electrode leads of the plurality of battery cells, and an insulation cover connected to the frame, the first part of the heat dissipation fin may be between the frame and the insulation cover, and the second part of the heat dissipation fin may be below a lower end of the frame.

In example embodiments, the separation structure may not cover lower surfaces of the plurality of battery cells to expose the lower surfaces of the plurality of battery cells to the outside of the separation structure.

In example embodiments, the battery pack may further include a bus bar coupled to at least one of the electrode leads of the plurality of battery cells, and the heat dissipation fin may thermally couple the bus bar to the bottom plate.

In example embodiments, the separation structure may further include a plurality of venting channels separated in the first direction, each of the plurality of venting channels may be provided above a corresponding cell accommodation space among the plurality of cell accommodation spaces, and the plurality of venting channels may extend in the second direction to guide a gas in the second direction.

In example embodiments, the separation structure may further include a plurality of separation plates spaced apart from each other in the first direction to define the plurality of cell accommodation spaces and the plurality of venting channels, and a cover plate provided on the plurality of separation plates to cover the plurality of cell accommodation spaces and the plurality of venting channels.

In example embodiments, adjacent venting channels among the plurality of venting channels and adjacent cell accommodation spaces among the plurality of cell accommodation spaces may be separated by a corresponding separation plate among the plurality of separation plates.

In example embodiments, each of the plurality of battery cells may be attached to a corresponding separation plate among the plurality of separation plates.

In example embodiments, each of the plurality of venting channels may extend from a first end to a second end in the second direction, the battery assembly may further include a blocking plate blocking the first end of each of the plurality of venting channels, and in each of the plurality of venting channels, a gas may flow in a venting direction from the first end toward the second end.

In example embodiments, the pack housing may further include a first side wall and a second side wall spaced apart from each other in the second direction, and a third side wall and a fourth side wall spaced apart from each other in the first direction, the second end of each of the plurality of venting channels may face the first side wall, and a venting device may be mounted on the third side wall of the pack housing.

In example embodiments, the pack housing may further include a support structure provided on the bottom plate and extending in the second direction, and the battery assembly may further include a fastening frame attached to an outermost battery cell in the first direction among the plurality of battery cells and fastened to the support structure.

In example embodiments, the separation structure may include a plurality of unit separation structures arranged in the first direction, and each of the plurality of unit separation structures may include a separation plate configured to separate adjacent cell accommodation spaces among the plurality of cell accommodation spaces and adjacent venting channels among the plurality of venting channels, and a unit cover plate connected to an upper part of the separation plate and configured to cover adjacent venting channels among the plurality of venting channels.

In example embodiments, the unit cover plates of the plurality of unit separation structures may be connected in the first direction.

### [Advantageous Effects]

According to example embodiments of the present invention, electrode leads of a battery cells are thermally coupled to a bottom plate equipped with a cooling function through a heat dissipation fin to improve cooling efficiency of the battery cells and effectively control heat generation of the battery cells.

According to example embodiments of the present invention, in a battery assembly, a plurality of battery cells are separated by separation plates of a separation structure to prevent or suppress thermal propagation between adjacent battery cells and prevent or suppress serial ignition of battery cells. Accordingly, the safety and reliability of the battery assembly including the battery cells may improve.

According to example embodiments of the present invention, the battery assembly may have a cell-to-pack structure that is assembled directly in a pack housing of a battery pack. In the battery assembly, the plurality of battery cells are exposed without being covered with a structure such as a frame to improve cooling efficiency of the plurality of battery cells. The battery assembly includes a fastening frame configured to be fastened to a pack housing of a battery pack to remove an assembly gap between the battery assembly and the pack housing, thereby improving energy density of the battery pack.

According to example embodiments of the present invention, a high-temperature gas generated in the plurality of battery cells is discharged along a venting direction provided by the separation structure, thereby implementing directional venting for discharging a vented gas in a predetermined specific direction.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view of a battery assembly according to example embodiments of the present invention.
FIG. 2 is a cross-sectional view of the battery assembly taken along line AA-AA' of FIG. 1.
FIG. 3 is a cross-sectional view of a separation structure and a fastening frame of the battery assembly of FIG. 1.
FIG. 4 is a cross-sectional view of a part of the battery assembly of FIG. 1.
FIG. 5 is a cross-sectional view of a battery assembly according to example embodiments of the present invention.
FIG. 6 is a cross-sectional view of the battery assembly taken along line BB-BB' of FIG. 1.
FIG. 7 is a perspective view of a battery pack according to example embodiments of the present invention.
FIG. 8 is a cross-sectional view of the battery pack taken along line CC-CC' of FIG. 7.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

In the present specification, a vertical direction may be defined as a Z-axis direction, and a horizontal direction may be defined as a direction perpendicular to the Z-axis direction. A first horizontal direction and a second horizontal direction may be orthogonal to each other and be respectively defined as an X-axis direction and a Y-axis direction.

### (First Embodiment)

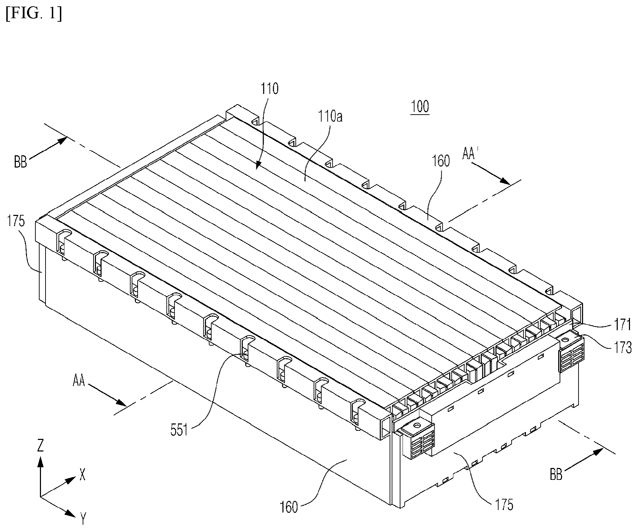

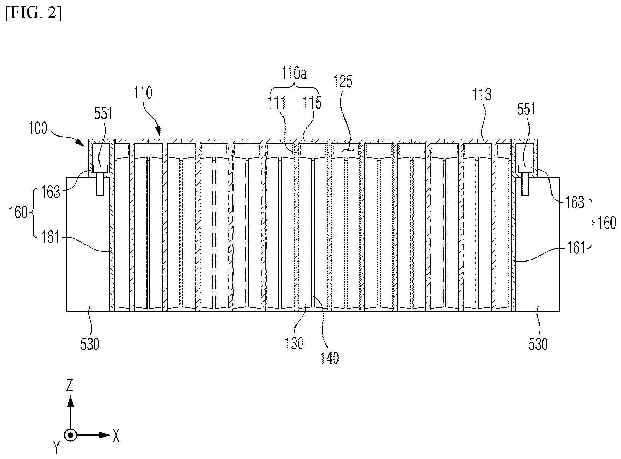

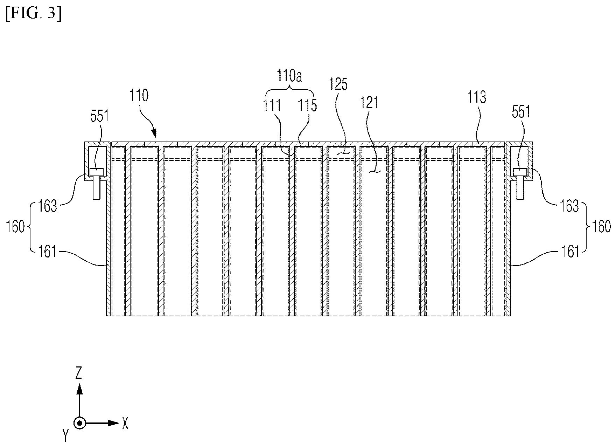

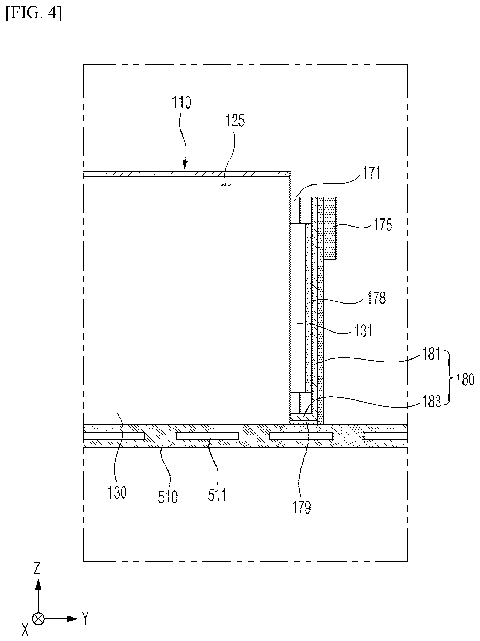

FIG. 1 is a perspective view of a battery assembly 100 according to example embodiments of the present invention. FIG. 2 is a cross-sectional view of the battery assembly 100 taken along line AA-AA' of FIG. 1. FIG. 3 is a cross-sectional view of a separation structure 110 and a fastening frame 160 of the battery assembly 100 of FIG. 1. FIG. 4 is a cross-sectional view of a part of the battery assembly 100 of FIG. 1.

Referring to FIGS. 1 to 4, the battery assembly 100 may include the separation structure 110, a plurality of battery cells 130, the fastening frame 160, and a heat dissipation fin 180.

The separation structure 110 may include a plurality of separation plates 111 spaced apart from each other in the first horizontal direction (e.g., the X-axis direction) and a cover plate 113 on the plurality of separation plates 111. Each of the separating plates 111 may have a flat plate shape extending in the second horizontal direction (e.g., the Y-axis direction) and the vertical direction (e.g., the Z-axis direction). The cover plate 113 may be connected to an upper end of each of the plurality of separation plates 111. The cover plate 113 may have a flat plate shape extending in the first horizontal direction (e.g., the X-axis direction) and the second horizontal direction (e.g., the Y-axis direction).

The separation structure 110 may provide a plurality of cell accommodation spaces 121 separated from each other. Each of the plurality of cell accommodation spaces 121 may accommodate one or more battery cells 130. The plurality of cell accommodation spaces 121 may be separated from each other in the first horizontal direction (e.g., the X-axis direction), and extend in the second horizontal direction (e.g., the Y-axis direction). Adjacent cell accommodation spaces 121 among the plurality of cell accommodation spaces 121 may be separated by a corresponding separation plate 111 among the plurality of separation plates 111.

The separation structure 110 may provide a plurality of venting channels 125 separated from each other. The plurality of venting channels 125 may be separated from each other in the first horizontal direction (e.g., the X-axis direction). Adjacent venting channels 125 among the plurality of venting channels 125 may be separated by a corresponding separation plate 111 among the plurality of separation plates 111. Each of the venting channels 125 may extend in the second horizontal direction (e.g., the Y-axis direction). Each of the venting channels 125 may be provided above a corresponding cell accommodation space 121 among the plurality of cell accommodation spaces 121 and may communicate with the corresponding cell accommodation space 121. Each of the venting channels 125 may be defined by the corresponding separation plate 111, the cover plate 113, and an upper surface of at least one battery cell 130 in the corresponding cell accommodation space 121. Each of the venting channels 125 may be provided between the cover plate 113 and the one or more battery cells 130 accommodated in the corresponding cell accommodation space 121 in the vertical direction (e.g., the Z-axis direction) and between two adjacent separation plates 111 in the first horizontal direction (e.g., the X-axis direction).

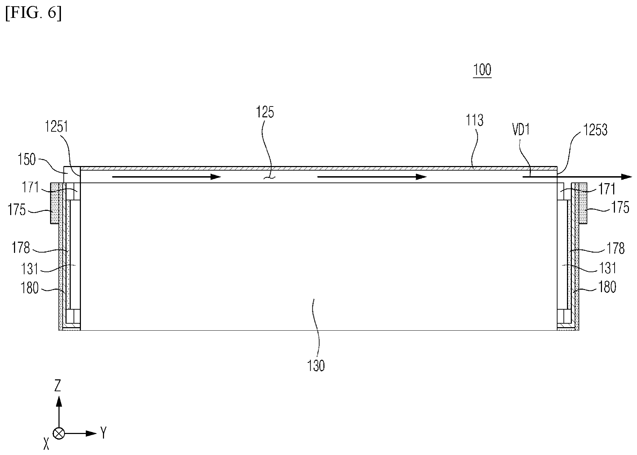

Each of the venting channels 125 may guide a high-temperature gas from the one or more battery cells 130 in the corresponding cell accommodation space 121 in the second horizontal direction (e.g., the Y-axis direction). The cover plate 113 may cover the plurality of venting channels 125 and the plurality of battery cells 130 to block a gas from flowing in the vertical direction (e.g., the Z-axis direction) between each of the venting channels 125 and a space outside the battery assembly 100. In each of the venting channels 125, a high-temperature gas may flow in the second horizontal direction (e.g., the Y-axis direction) along a lower surface of the cover plate 113 facing the plurality of battery cells 130. Each of the venting channels 125 may extend in the second horizontal direction (e.g., the Y-axis direction), and include a first end portion 1251 of FIG. 6 and a second end portion 1253 of FIG. 6 that are opposite to each other in the second horizontal direction (e.g., the Y-axis direction). At least one of the first end portion 1251 and the second end portion 1253 of each of the venting channels 125 may be exposed to a space outside the battery assembly 100, and the flow of a gas between the space outside the battery assembly 100 and each of the venting channels 125 may be allowed.

In example embodiments, the separation structure 110 may include a plurality of unit separation structures 110a. Each of the unit separation structures 110a may include one separation plate 111 and one unit cover plate 115 connected to an upper end of the separation plate 111. The plurality of unit separation structures 110a may be arranged in the first horizontal direction (e.g., the X-axis direction). A plurality of unit cover plates 115 of the plurality of unit separation structures 110a may be arranged and connected in the first horizontal direction (e.g., the X-axis direction). The cover plate 113 may include the plurality of unit cover plates 115.

In example embodiments, each of the unit separation structures 110a may be manufactured through an extrusion process.

In example embodiments, each of the unit cover plates 115 may include a first segment and a second segment that extend in opposite directions from an upper end of a corresponding separation plate 111. The first segment of each of the unit cover plate 115 may at least partially cover one of two adjacent venting channels 125, and the second segment of each of the unit cover plate 115 may at least partially cover the other of the two adjacent venting channels 125. Each of the unit separation structures 110a may have a T-shape when viewed in a cross-sectional view.

The plurality of battery cells 130 may be accommodated in the plurality of cell accommodation spaces 121 of the separation structure 110 and arranged in the first horizontal direction (e.g., the X-axis direction). The battery cells 130 in different cell accommodation spaces 121 of the separation structure 110 may be separated by the separation plate 111. Each of the battery cells 130 may be attached to a corresponding separation plate 111 among the plurality of separation plates 111 by an adhesive member. The adhesive member may include, for example, an adhesive tape or a resin layer.

In example embodiments, at least one of the plurality of cell accommodation spaces 121 of the separation structure 110 may accommodate a plurality of battery cells 130, e.g., two battery cells 130, arranged in the first horizontal direction (e.g., the X-axis direction).

In example embodiments, at least one of the plurality of cell accommodation spaces 121 of the separation structure 110 may include a pad 140 and two battery cells 130 spaced apart from each other with the pad 140 interposed therebetween. The pad 140 may be attached to each of the two battery cells 130 by an adhesive tape or an adhesive member formed of a resin layer. The pad 140 may be a thermal barrier pad configured to thermally separate the two battery cells 130 from each other and support the two battery cells 130.

The battery cell 130 may be accommodated in the cell accommodation space 121 of the separation structure 110 and extend in the second horizontal direction (e.g., the Y-axis direction) within the cell accommodation space 121. Electrode leads 131 may be provided in opposite ends of the battery cell 130 in the second horizontal direction (e.g., the Y-axis direction). When the battery cell 130 is accommodated in the cell accommodation space 121 of the separation structure 110, two side surfaces of the battery cell 130 may be covered with two adjacent separation plates 111 in the first horizontal direction (e.g., the X-axis direction), and an upper surface of the battery cell 130 may be covered with the cover plate 113. In example embodiments, a lower surface of the battery cell 130 may be exposed to the outside of the separation structure 110 without being covered with the separation structure 110.

Each of the battery cells 140 is a basic unit of a lithium ion battery, i.e., a secondary battery. Each of the battery cells 130 may include an electrode assembly, an electrolyte, and a cell case. The electrode assembly in the cell case may include a positive electrode, a negative electrode, and a separator between the positive electrode and the negative electrode. The electrode assembly may be a jelly-roll type electrode assembly or a stack type electrode assembly according to a form of assembly. The jelly-roll type electrode assembly may include a structure in which a positive electrode, a negative electrode, and a separator between the positive and negative electrodes are wound together. The stack type electrode assembly may include a plurality of positive electrodes and a plurality of negative electrodes that are sequentially stacked, and a plurality of separators therebetween. The positive electrode may include a positive electrode current collector and a positive electrode active material. The negative electrode may include a negative electrode current collector and a negative electrode active material.

The plurality of battery cells 130 may be connected in series and/or in parallel. For example, the plurality of battery cells 130 may be connected to each other in series. For example, the plurality of battery cells 130 may be connected to each other in parallel. For example, when a set of two or more battery cells 130 connected in parallel is defined as a bank, one bank including two or more battery cells 130 connected in parallel and another bank including two or more battery cells 130 connected in parallel may be connected in series.

Each of the battery cells 130 may be a pouch type battery cell, a cylindrical battery cell, or a prismatic battery cell. An electrode assembly of the pouch type battery cell is embedded in a pouch case including an aluminum laminate sheet. An electrode assembly of the cylindrical battery cell is embedded in a cylindrical metal can. An electrode assembly of the prismatic battery cell is embedded in a prismatic metal can. In example embodiments, each of the battery cells 130 may be a pouch-type battery cell, and a length of each battery cell 130 in the second horizontal direction (e.g., the Y-axis direction) may be greater than a length thereof in the first horizontal direction (e.g., the X-axis direction).

The plurality of battery cells 130 may be arranged in the first horizontal direction (e.g., the X-axis direction) to form a cell stack. When viewed in a plan view, the cell stack may have a rectangular shape. The cell stack may include two side surfaces (i.e., a first side surface and a second side surface) opposite to each other in the first horizontal direction (e.g., the X-axis direction), a front surface and a rear surface opposite to each other in the second horizontal direction (e.g., the Y-axis direction), and an upper surface and a lower surface opposite to each other in the vertical direction (e.g., the Z-axis direction).

Frames 171 supporting the electrode leads 131 of the plurality of battery cells 130 may be on the front surface and the rear surface of the cell stack. Slits into which the electrode leads 131 are inserted may be provided in the frame 171 on the front surface of the cell stack, and slits into which the electrode leads 131 are inserted may be provided in the frame 171 on the rear surface of the cell stack.

The frames 171 may support bus bars 173. The bus bars 173 may be electrically and physically connected to at least one of the electrode leads 131 of the plurality of battery cells 130. The bus bars 173 may be coupled to at least one of the electrode leads 131 of the plurality of battery cells 130 by welding. The bus bar 173 may include a terminal-bus bar for electrically connecting the cell stack of the battery assembly 100 to a cell stack of another battery assembly or an external device. In some example embodiments, the bus bars 173 may include inter-bus bars connected to electrode leads 131 of different battery cells 130 to electrically connect the different battery cells 130.

The battery assembly 100 may further include insulation covers 175 connected to the frames 171. One insulation cover 175 may cover the frame 171 on the front surface of the cell stack and at least partially cover each of the electrode leads 131 supported by the frame 171 on the front surface of the cell stack and each of the bus bars 173. Another insulation cover 175 may cover the frame 171 on the rear surface of the cell stack and at least partially cover each of the electrode leads 131 supported by the frame 171 on the rear surface of the cell stack and each of the bus bars 173.

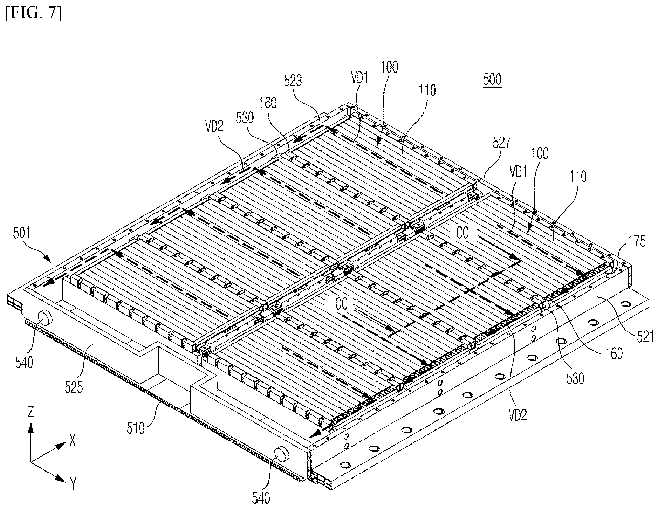

The fastening frame 160 may be attached to each of outermost battery cells 130 in the first horizontal direction (e.g., the X-axis direction) among the plurality of battery cells 130. The fastening frame 160 may be fastened to an external support structure 530. For example, the external support structure 530 may be provided in a pack housing 501 of FIG. 7 of a battery pack 500 of FIG. 7 in which the battery assembly 100 is mounted, and the battery assembly 100 may be mounted in the pack housing 501 in a side mounting manner through the fastening frame 160.

The fastening frame 160 may cover one side surface of the battery cell 130 and be attached to the one side surface of the battery cell 130 by an adhesive tape or an adhesive member formed of a resin layer. The fastening frame 160 may be fastened to the external support structure 530 by a bolt 551. For example, the fastening frame 160 may include a fixing plate 161 attached to the battery cell 130 and a flange 163 fastened to the external support structure 530 by the bolt 551. The flange 163 may be connected to an upper portion of the fixing plate 161 and may be on the external support structure 530.

The heat dissipation fin 180 may thermally couple at least one of the electrode leads 131 of the plurality of battery cells 130 to a bottom plate 510 provided below the plurality of battery cells 130. The bottom plate 510 may be configured to support the plurality of battery cells 130 and may include a cooling channel 511 to allow a cooling fluid to flow therethrough. For example, the bottom plate 510 may be a part of the pack housing 501 of the battery pack 500. The heat dissipation fin 180 may be coupled to one or more electrode leads 131. The heat dissipation fin 180 may include a highly thermally conductive material, for example, a metal.

The heat dissipation fin 180 may include a first part 181 connected to at least one of the electrode leads 131 of the plurality of battery cells 130 and a second part 183 connected to an upper surface of the bottom plate 510. The first part 181 of the heat dissipation fin 180 may be between the frame 171 and the insulation cover 175 and generally extend in the vertical direction (e.g., the Z-axis direction). The second part 183 of the heat dissipation fin 180 may be below a lower end of the frame 171 and extend along the upper surface of the bottom plate 510. An extending direction of the second part 183 of the heat dissipation fin 180 and an extending direction of the first part 181 of the heat dissipation fin 180 intersect each other and thus the heat dissipation fin 180 may have a bent shape when viewed in a cross-sectional view.

A thermally conductive adhesive layer 178 may be interposed between the first part 181 of the heat dissipation fin 180 and at least one electrode lead 131. The thermally conductive adhesive layer 178 may thermally and physically couple the first part 181 of the heat dissipation fin 180 and the at least one electrode lead 131. The thermally conductive adhesive layer 178 is electrically non-conductive, and the heat dissipation fin 180 and the at least one electrode lead 131 may be electrically insulated from each other by the thermally conductive adhesive layer 178. The thermally conductive adhesive layer 178 may include, for example, a thermal interface material (TIM) or a thermal resin.

A thermally conductive adhesive layer 179 may be interposed between the second part 183 of the heat dissipation fin 180 and the bottom plate 510. The thermally conductive adhesive layer 179 may thermally and physically couple the second part 183 of the heat dissipation fin 180 and the bottom plate 510. The thermally conductive adhesive layer 179 may include, for example, a TIM or a thermal resin.

When the electrode leads 131 of the battery cells 130 or the bus bars 173 are heated, heat may be transferred to central parts of the battery cells 130, thus intensifying heat generation of the battery cells 130, unless temperatures of the electrode leads 131 of the battery cells 130 or the bus bars 173 are not reduced. However, according to example embodiments of the present invention, the electrode leads 131 of the battery cells 130 are thermally coupled to the bottom plate 510 equipped with a cooling function using the heat dissipation fin 180, thereby improving cooling efficiency of the battery cells 130 and effectively controlling heat generation of the battery cells 130.

In example embodiments, an upper cooling plate may be attached onto the separation structure 110. The upper cooling plate may include a cooling channel configured to allow a cooling fluid to flow therethrough. The upper cooling plate may be thermally and physically coupled to the separation structure 110 by a thermally conductive adhesive layer, such as a thermal resin, applied along the cover plate 113 of the separation structure 110. The upper cooling plate may be thermally coupled to the battery cells 130 through the thermally conductive adhesive layer and the separation structure 110.

According to example embodiments of the present invention, in the battery assembly 100, the plurality of battery cells 130 are separated by the separation plates 111 of the separation structure 110 to prevent or suppress thermal propagation between adjacent battery cells 130 and prevent or suppress serial ignition of the battery cells 130.

According to example embodiments of the present invention, the battery assembly 100 may have a cell-to-pack structure directly assembled in the pack housing 501 of the battery pack 500. In the battery assembly 100, the plurality of battery cells 130 are exposed without being covered with a structure such as a frame to improve cooling efficiency of the plurality of battery cells 130. In addition, the battery assembly 100 includes the fastening frame 160 configured to be fastened to the pack housing 501 of the battery pack 500 to remove an assembly gap between the battery assembly 100 and the pack housing 501, thereby improving energy density of the battery pack 500.

### (Second Embodiment)

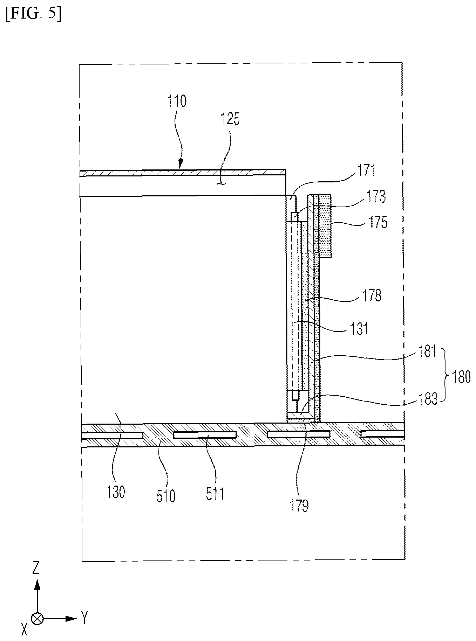

FIG. 5 is a cross-sectional view of a battery assembly 100 according to example embodiments of the present invention.

Referring to FIG. 5, an electrode lead 131 of a battery cell 130 may be coupled to a bus bar 173, and the electrode lead 131 of the battery cell 130 and the bus bar 173 may be thermally coupled to a bottom plate 510 through a heat dissipation fin 180. The bus bar 173 may be an inter-bus bar coupled to electrode leads 131 of different battery cells 130 to electrically connect the different battery cells 130. The electrode leads 131 and the bus bar 173 coupled to one another may be thermally and physically coupled to a first part 181 of the heat dissipation fin 180 through a thermally conductive adhesive layer 178.

### (Third Embodiment)

FIG. 6 is a cross-sectional view of the battery assembly 100 taken along line BB-BB' of FIG. 1.

Referring to FIGS. 1 to 4 and 6, the battery assembly 100 may include a blocking plate 150 connected to an end of the separation structure 110 in the second horizontal direction (e.g., the Y-axis direction). The blocking plate 150 may close one end of each of the plurality of venting channels 125 so that a gas may be discharged in only one direction from the plurality of venting channels 125 of the separation structure 110.

The blocking plate 150 may close the first end 1251 of each of the venting channels 125 not to allow the flow of a gas through the first end 1251 of each of the venting channels 125 provided to the separation structure 110. Because the first end 1251 of each of the venting channels 125 is closed by the blocking plate 150, a gas in each of the venting channels 125 may flow in only one venting direction VD1 from the first end 1251 of each of the venting channels 125 toward the second end 1253 and be discharged to the outside of the battery assembly 100 through the second end 1253 of each of the venting channels 125. The second end 1253 of each of the venting channels 125 may be an outlet of the venting channel 125 through which a gas is discharged to the outside.

When a gas is generated in the battery cell 130, the generated gas may flow to the venting channel 125 above the battery cell 130, flow in the venting direction VD1 through the venting channel 125, and thereafter be discharged to the outside through the second end 1253 of the venting channel 125.

According to example embodiments of the present invention, a high-temperature gas generated in the plurality of battery cells 130 is discharged along the venting direction VD1 provided by the separation structure 110 to implement directional venting for discharging a vented gas in a specific direction.

### (Fourth Embodiment)

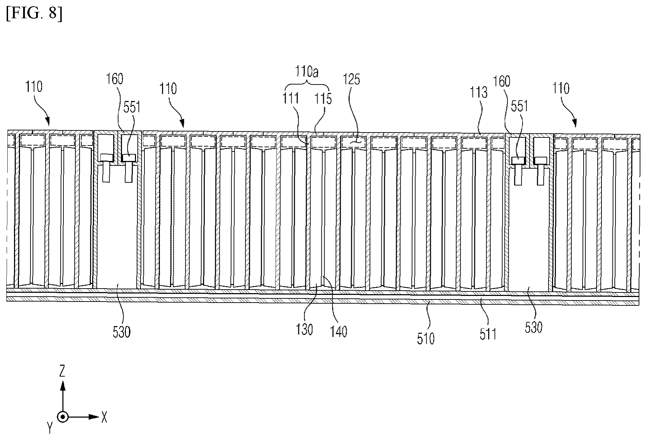

FIG. 7 is a perspective view of the battery pack 500 according to example embodiments of the present invention. FIG. 8 is a cross-sectional view of the battery pack 500 taken along line CC-CC' of FIG. 7.

Referring to FIGS. 1 to 6, 7 and 8, the battery pack 500 may include the pack housing 501 and the battery assembly 100 in the pack housing 501. The battery pack 500 may include one or more battery assemblies 100 in the pack housing 501. In example embodiments, the battery pack 500 may include a plurality of battery assemblies 100 arranged in the first horizontal direction (e.g., the X-axis direction) and the second horizontal direction (e.g., the Y-axis direction).

The pack housing 501 may provide an accommodation space for accommodation of the battery assembly 100. The pack housing 501 may include the bottom plate 510 and side walls (i.e., first to fourth side walls 521, 523, 525, and 527) connected to edges of the bottom plate 510. The pack housing 501 may further include a pack lid connected on the side walls of the pack housing 501 to cover the accommodation space. The accommodation space of the pack housing 501 may be a sealed space.

The bottom plate 510 may have a flat plate shape parallel to the first horizontal direction (e.g., the X-axis direction) and the second horizontal direction (e.g., the Y-axis direction). The bottom plate 510 may support the battery assembly 100. The battery assembly 100 may be thermally and physically coupled to the bottom plate 510 through a thermally conductive adhesive layer between the battery assembly 100 and the bottom plate 510. In example embodiments, lower surfaces of the plurality of battery cells 130 may not be covered with the separation structure 110 to be exposed to the outside of the separation structure 110, and may be connected to the bottom plate 510. In example embodiments, the plurality of battery cells 130 may be thermally and physically coupled to the bottom plate 510 through the thermally conductive adhesive layer. The thermally conductive adhesive layer 179 may include a TIM or a thermal resin.

The bottom plate 510 may include the cooling channel 511 configured to allow a cooling fluid to flow therethrough and be configured to cool the battery assembly 100. A cooling fluid from the outside of the battery pack 500 may be supplied to an inlet of the cooling channel 511, flow along the cooling channel 511, and be discharged to the outside through an outlet of the cooling channel 511. While the cooling fluid flows along the cooling channel 511, the plurality of battery cells 130 of the battery assembly 100, the electrode leads 131 of the plurality of battery cells 130, and the bus bars 173 may be cooled. The cooling fluid may include a coolant and/or a refrigerant. In example embodiments, the bottom plate 510 may be formed by an extrusion process.

According to example embodiments of the present invention, the lower surfaces of the plurality of battery cells 130 are not covered with the separation structure 110 or other frames and thus the plurality of battery cells 130 may be thermally coupled to the bottom plate 510 with the cooling channel 511 using the thermally conductive adhesive layer. The plurality of battery cells 130 of the battery assembly 100 are thermally coupled to the bottom plate 510 with the cooling channel 511 of the pack housing 501, thereby enhancing cooling of the plurality of battery cells 130.

The side walls of the pack housing 501 may include the first side wall 521 and the second side wall 523 that face each other and are spaced apart from each other in the second horizontal direction (e.g., the Y-axis direction), and the third side wall 525 and the fourth side wall 527 that face each other and are spaced apart from each other in the first horizontal direction (e.g., the X-axis direction). The side walls of the pack housing 501 may surround the accommodation space. The third side wall 525 of the pack housing 501 may be a front wall forming a front part of the battery pack 500, and the fourth side wall 527 of the pack housing 501 may be a rear wall forming a rear part of the battery pack 500.

A venting device 540 may be mounted on the third side wall 525 of the pack housing 501. The venting device 540 may be mounted in an exhaust passage between the accommodation space of the pack housing 501 and a space outside the pack housing 501, and configured to selectively exhaust a gas between the accommodation space of the pack housing 501 and the space outside the pack housing 501. In example embodiments, the venting device 540 may include a check valve, a relief valve, a safety valve, and/or a rupture disk.

In example embodiments, the venting device 540 may be a relief valve or a check valve configured to selectively open or close a gas exhaust passage according to internal pressure of the accommodation space of the pack housing 501. The check valve may be configured to open the gas discharge passage to discharge a gas to the outside of the pack housing 501 when the internal pressure of the accommodation space of the pack housing 501 is higher than reference pressure and to close the gas discharge passage when the internal pressure of the accommodation space of the pack housing 501 is lower than or equal to the reference pressure.

The pack housing 501 may include a plurality of support structures 530 on the bottom plate 510. The plurality of support structures 530 are provided on the upper surface of the bottom plate 510 and be spaced apart from each other in the first horizontal direction (e.g., the X-axis direction). Each of the plurality of support structures 530 may extend in the second horizontal direction (e.g., the Y-axis direction). Each of the plurality of support structures 530 may be referred to as a cross-beam structure. The plurality of support structures 530 may separate or partition the accommodation space of the pack housing 501 into a plurality of sub-accommodation spaces. The plurality of sub-accommodation spaces may be separated or partitioned in the first horizontal direction (e.g., the X-axis direction), and one battery assembly 100 may be disposed in each of the sub-accommodation spaces.

The fastening frame 160 of each of the battery assemblies 100 may be on a corresponding support structure 530 among the plurality of support structures 530. Each of the battery assemblies 100 may be fastened to the pack housing 501 by fastening the fastening frame 160 to the corresponding support structure 530 among the plurality of support structures 530 by the bolt 551. More specifically, each of the battery assemblies 100 may be fastened to the pack housing 501 by fastening a pair of fastening frames 160 to a pair of corresponding support structures 530 among the plurality of battery support structures 530.

In example embodiments, two adjacent battery assemblies 100 in the first horizontal direction (e.g., the X-axis direction) may share the same single support structure 530. That is, one of the two adjacent battery assemblies 100 in the first horizontal direction (e.g., the X-axis direction) and the other of the two adjacent battery assemblies 100 may be fastened to the same single support structure 530.

In example embodiments, each of the battery assemblies 100 may be configured to discharge a gas in the venting direction VD1, and an outlet of each of the battery assemblies 100 in the venting direction VD1 may face the first side wall 521 or the second side wall 523. Each of the battery assemblies 100 may be mounted in the pack housing 501 such that the second end 1253 of the venting channel 125 on which the outlet of the venting channel 125 is provided faces one of the first and second side walls 521 and 523. In this case, a gas discharged from each of the battery assemblies 100 may flow to the third side wall 525 along the first side wall 521 or the second side wall 523 in a venting direction VD2 parallel to the first horizontal direction (e.g., the X-axis direction) and be thereafter discharged to the outside of the battery pack 500 through the venting device 540 on the third side wall 525.

In example embodiments, the battery pack 500 may include a plurality of battery assemblies 100 arranged in two rows. The battery assemblies 100 in the first row may be arranged in the first horizontal direction (e.g., the X-axis direction) and be closer to the first side wall 521 than to the second side wall 523. The battery assemblies 100 in the second row may be arranged in the first horizontal direction (e.g., the X-axis direction) and be closer to the second side wall 523 than to the first side wall 521. Each of the battery assemblies 100 in the first row may be arranged such that an outlet thereof in the venting direction VD1 faces the first side wall 521, and each of the battery assemblies 100 in the second row may be arranged such that an outlet thereof in the venting direction VD1 faces the second side wall 523. In each of the battery assemblies 100 in the first row, the second ends 1253 of the venting channels 1250 of the separation structure 110, which are not closed by the blocking plate 150, may face the first side wall 521, and the first ends 1251 of the venting channels 1250 of the separation structure 110, which are closed by the blocking plate 150, may face the second side wall 523. In each of the battery assemblies 100 in the second row, the second ends 1253 of the venting channels 1250 of the separation structure 110, which are not closed by the blocking plate 150, may face the second side wall 523, and the first ends 1251 of the venting channels 1250 of the separation structure 110, which are closed by the blocking plate 150, may face the first side wall 521. A gas discharged from the battery assemblies 100 in the first row may flow to the third side wall 525 along the first side wall 521 in the venting direction VD2 parallel to the first horizontal direction (e.g., the X-axis direction), and be discharged to the outside of the battery pack 500 through the venting device 540 on the third side wall 525. A gas discharged from the battery assemblies 100 in the second row may flow to the third side wall 525 along the second side wall 523 in the venting direction VD2 parallel to the first horizontal direction (e.g., the X-axis direction), and be discharged to the outside of the battery pack 500 through the venting device 540 on the third side wall 525.

In example embodiments, the battery pack 500 may further include an upper cooling plate (not shown) on the battery assemblies 100. A thermally conductive adhesive layer such as a TIM or a thermal resin may be interposed between each of the separation structures 110 of the battery assemblies 100 and the upper cooling plate. The separation structures 110 of the battery assemblies 100 may be thermally and physically coupled to the upper cooling plate by the thermally conductive adhesive layer. The upper cooling plate may include a cooling channel configured to allow a cooling fluid to flow therethrough, and the battery cells 130 of the battery assemblies 100 may be cooled while the cooling fluid flows along the cooling channel of the upper cooling plate.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a pack housing including a bottom plate with a cooling channel; and
a battery assembly mounted in the pack housing,
wherein the battery assembly comprises:
a separation structure with a plurality of cell accommodation spaces separated from each other in a first direction;
a plurality of battery cells accommodated in the plurality of cell accommodation spaces of the separation structure and extending in a second direction perpendicular to the first direction; and
a heat dissipation fin configured to thermally couple at least one of electrode leads of the plurality of battery cells to the bottom plate.

2. The battery pack of claim 1, further comprising
a thermally conductive adhesive layer between at least one of the electrode leads of the plurality of battery cells and the heat dissipation fin.

3. The battery pack of claim 1, wherein
the heat dissipation fin comprises:
a first part connected to at least one of the electrode leads of the plurality of battery cells; and
a second part extending along an upper surface of the bottom plate and connected to the bottom plate.

4. The battery pack of claim 3, further comprising:
a frame configured to support the electrode leads of the plurality of battery cells; and
an insulation cover connected to the frame,
wherein the first part of the heat dissipation fin is between the frame and the insulation cover, and
the second part of the heat dissipation fin is below a lower end of the frame.

5. The battery pack of claim 1, wherein
the separation structure does not cover lower surfaces of the plurality of battery cells to expose the lower surfaces of the plurality of battery cells to the outside of the separation structure.

6. The battery pack of claim 1, further comprising
a bus bar coupled to at least one of the electrode leads of the plurality of battery cells,
wherein the heat dissipation fin thermally couples the bus bar to the bottom plate.

7. The battery pack of claim 1, wherein
the separation structure further comprises a plurality of venting channels separated in the first direction,
wherein each of the plurality of venting channels is provided above a corresponding cell accommodation space among the plurality of cell accommodation spaces, and
the plurality of venting channels extend in the second direction to guide a gas in the second direction.

8. The battery pack of claim 7, wherein
the separation structure further comprises:
a plurality of separation plates spaced apart from each other in the first direction to define the plurality of cell accommodation spaces and the plurality of venting channels; and
a cover plate provided on the plurality of separation plates to cover the plurality of cell accommodation spaces and the plurality of venting channels.

9. The battery pack of claim 8, wherein
adjacent venting channels among the plurality of venting channels and adjacent cell accommodation spaces among the plurality of cell accommodation spaces are separated by a corresponding separation plate among the plurality of separation plates.

10. The battery pack of claim 8, wherein
each of the plurality of battery cells is attached to a corresponding separation plate among the plurality of separation plates.

11. The battery pack of claim 7, wherein
each of the plurality of venting channels extends from a first end to a second end in the second direction,
the battery assembly further comprises a blocking plate blocking the first end of each of the plurality of venting channels, and
in each of the plurality of venting channels, a gas flows in a venting direction from the first end toward the second end.

12. The battery pack of claim 11, wherein
the pack housing further comprises:
a first side wall and a second side wall spaced apart from each other in the second direction; and
a third side wall and a fourth side wall spaced apart from each other in the first direction,
wherein the second end of each of the plurality of venting channels faces the first side wall, and
a venting device is mounted in the third side wall of the pack housing.

13. The battery pack of claim 1, wherein
the pack housing further comprises a support structure provided on the bottom plate and extending in the second direction,
wherein the battery assembly further comprises a fastening frame attached to an outermost battery cell in the first direction among the plurality of battery cells and fastened to the support structure.

14. The battery pack of claim 1, wherein
the separation structure comprises a plurality of unit separation structures arranged in the first direction,
wherein each of the plurality of unit separation structures comprises:
a separation plate configured to separate adjacent cell accommodation spaces among the plurality of cell accommodation spaces and adjacent venting channels among the plurality of venting channels; and
a unit cover plate connected to an upper part of the separation plate and configured to cover adjacent venting channels among the plurality of venting channels.

15. The battery pack of claim 14, wherein
the unit cover plates of the plurality of unit separation structures are connected in the first direction.
